# EUROPEAN PATENT SPECIFICATION

(11) **EP 1 422 053 B1**
(45) Date of publication and mention of the grant of the patent: **16.08.2006**
(21) Application number: 03026588.8
(22) Date of filing: 19.11.2003
(51) Int. Cl.: B31B 37/00

(54) **Device for fitting a tubular element on a support of a complementary cross section and for defining a bottom of the tubular element**
Vorrichtung zur Befestigung eines schlauchförmiges Elements auf einer Unterlage mit einer dementsprechenden Komplementarform, und Formen des Bodens dieses Elements
Dispositif pour la fixation d'un élément tubulaire sur un support de forme complémentaire et pour la formation du fond de l'élément tubulaire

(30) Priority: 20.11.2002 IT BO20020733
(43) Date of publication of application: 26.05.2004
(73) Proprietor: Fioretti, Luigi, 40068 S. Lazzaro di Savena (Bologna) (IT)
(72) Inventor: Fioretti, Luigi, 40068 S. Lazzaro di Savena (Bologna) (IT)
(74) Representative: Dall'Olio, Giancarlo

(56) References cited:
- EP-A- 1 188 542
- WO-A-03/024821
- GB-A- 1 032 711

## Description

The present invention relates to the technical field concerning apparatuses for producing containers beginning from a sheet of heat-weldable plastic material.

More in detail, the present invention relates to a device, which automatically connects single tubular elements, made from a single tubular piece obtained from a film of plastic heat-weldable material, on corresponding supports of an apparatus for forming containers, and which forms the bottom of the containers.

In the field mentioned above, there is known the mode of obtaining containers beginning from a film of plastic heat-weldable material, after single tubular or sleeve elements have been formed beginning from this film

For example, the film of plastic material is unwound from a relative reel and wound on a core, overlapping the relative longitudinal edges to define a sleeve. This sleeve is then stabilized by welding the overlapped longitudinal edges of the film and cut crosswise, in order to obtain single tubular elements, from which the containers are made.

Then, the so obtained single tubular elements are fitted, manually by an operator, on corresponding supports, whose cross-section is complementary and which are situated equidistant on a relative conveying line of the apparatus, in order to form and define the complete shape of the containers.

The conveying line conveys different supports with relative single tubular elements toward subsequent working stations: for example station, where the outer end of the single tubular element is folded to form the container bottom, bottom heat-welding station, station, where the exceeding portion of the material forming bottom is trimmed, and so on.

A first disadvantage currently met derives from the fact that a suitable apparatus for previously forming single tubular elements from a film of plastic material is separated from the apparatus for producing and defining the complete container shape, therefore there is no functional and working correlation between the two apparatuses, which doubtlessly influences the productive performance.

Moreover, the productive performance is considerably influenced by manual fitting of single tubular elements on the corresponding supports of the apparatus, which doubtlessly reduces the working speed of the forward movement of the conveying line.

For example, the document EP 1.118.542 describes an apparatus for forming containers beginning from tubular elements, which are fitted on a relative support in a working station, while the container bottom is defined in a subsequent working station.

The object of the present invention is to propose a device, which fits a tubular element on a support of a complementary section, and defines the bottom of the tubular element, without the above mentioned disadvantages of prior art.

In particular, the main object of the present invention is to propose a device, which is capable of fitting single tubular elements on corresponding supports of an apparatus for forming containers in an automatic way, and in suitable step relation with the forward movement of the apparatus conveying line.

Another object of the present invention is to propose a device, which allows definition of the bottom of the single tubular elements, after the latter have been fitted on the corresponding supports.

A further object of the present invention is to propose a device, which fits single tubular elements on corresponding supports, beginning from a single tubular piece obtained from a relative film of heat-weldable plastic material.

The above mentioned objects are obtained in accordance with the contents of the claims.

The characteristic features of the present invention will be pointed out in the following description of a preferred embodiment of a device for fitting a tubular element on a support of a complementary cross section and for defining a bottom of the tubular element, such description having only an example value with reference to the enclosed drawings, in which:
- Figure 1 is schematic lateral view of the device for fitting a tubular element on a support of complementary section and for defining the bottom of the tubular element, proposed by the present invention, considered as a whole;
- Figure 2 is a schematic lateral enlarged view of the particular K indicated in Figure 1;
- Figures 3A, 3B, 3C are detailed views of particularly significant elements of the proposed device in subsequent, separate working steps related to the association of a tubular element to a corresponding support and to the definition of the tubular element bottom.

With reference to the enclosed figures, the reference letter (D) indicates the device for fitting a tubular element (T) on a support (S) of complementary section, and for defining the bottom (F) of the tubular element, proposed by the present invention, as a whole.

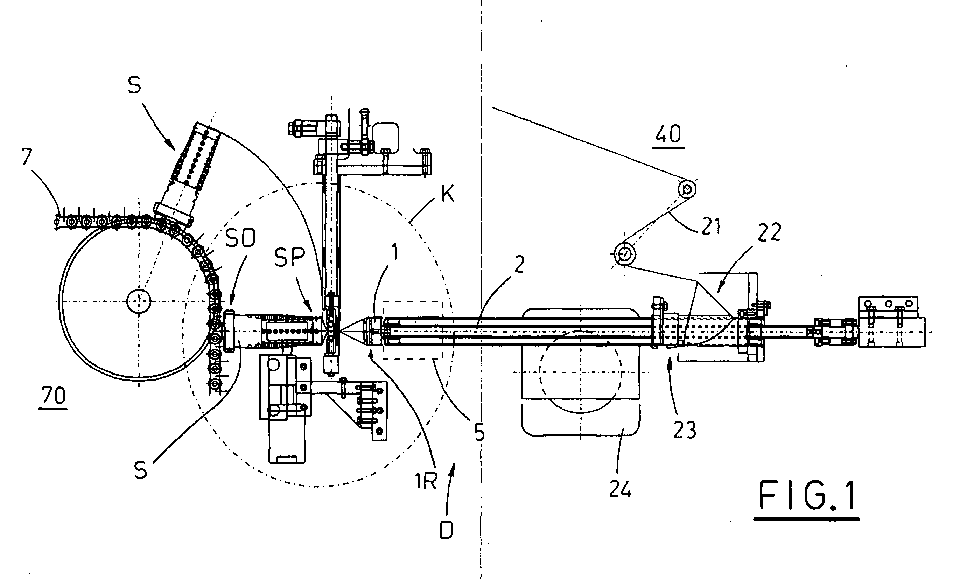

The device (D), as for example shown in Figure 1, is situated between a station (40) for feeding a film (21) of heat-weldable plastic material and an apparatus (70) for forming containers beginning from tubular elements obtained from the film (21).

The apparatus (70) includes a conveying line (7), for example a chain, which has a plurality of equidistant supports (S), aimed at receiving and supporting corresponding tubular elements and at transferring them toward subsequent working stations for forming containers beginning from the tubular elements.

The proposed device (D) includes a stationary element (2), of elongated shape, whose cross-section corresponds to the cross-section of the containers, which will be formed by the apparatus.

The stationary element (2) is situated directly downstream of the outlet section of the station (40) feeding film (21) of plastic material.

At this outlet section, there are means (22) for folding the film (21) and means (23) for winding the latter on the stationary element (2), so as to overlap the longitudinal edges of the film (21), in order to form a single tubular piece (20).

Thus, the cross-section of the tubular piece (20) corresponds to the cross-section of the stationary element (2), and consequently to the cross-section of the containers to be obtained.

Beside the tubular piece (20), there are welding means (24), which weld the above mentioned overlapped longitudinal edges, in order to complete the closure of the lateral surface of the piece (20).

The welding means (24) are not shown in detail in the proposed figures, because they are known.

The longitudinal dimensions of the stationary element (2) are such, as to define a corresponding tubular piece (20), which includes, in a single body, a series of single and subsequent tubular elements (T), whose longitudinal dimensions substantially correspond to those of the supports (S), on which they will be fitted.

Therefore, the particular feature of the proposed device (D) lies in the fact that it transfers and fits the single tubular elements (T) on the corresponding supports, and at the same time, separates them from the single piece (20), in a completely automatic and mechanized way.

For this purpose, the device (D) includes a moving member (1), which is connected to the stationary element (2), in the region of the end of the latter turned toward the containers forming apparatus (70), and which is aimed at acting on a first end (T1) of a tubular element (T), situated at one end of the piece (20), in order to transfer the latter to a proximal end (SP) of a relative support (S) and to allow the tubular element (T) to be fitted thereon, so that the relative first end (T1) result to be situated in the region of the distal end (SD) of the support (S) and the relative second end (T2) is situated near the proximal end (SP) of the support (S).

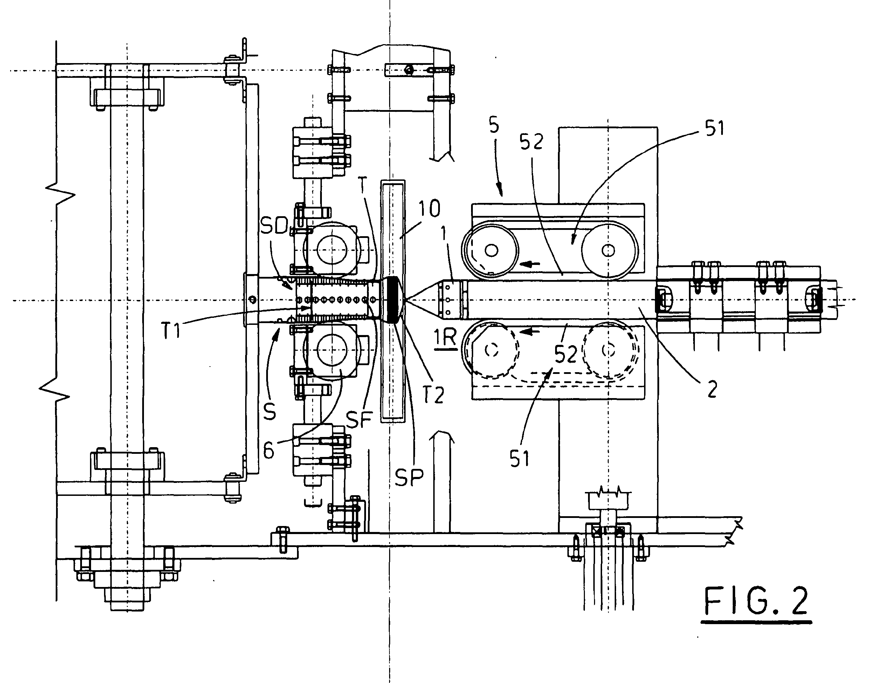

The device (D) includes also means (10) for folding the second end (T2) onto the proximal end (SP) of the support (S) and for welding the second end (T2), in order to define a bottom (F) of the tubular element (T) (see Figure 2).

The folding and welding means (10) are connected to suitable cutting means (11), aimed at cutting the second end (T2) of the tubular element (T) fitted on the support (S) from the piece (20), that is from the subsequent tubular element (T), comprised in the piece (20), to be fitted on a subsequent support (S) of the apparatus.

According to the embodiment shown in the enclosed figures, the folding and welding means (10), as well as the cutting means (11), are supported by a pair of arms, set one opposite to the other in a normally open configuration, and aimed at being set closed to each other when the tubular element (T) is positioned on the relative support (S), as it will be more precisely described in the following.

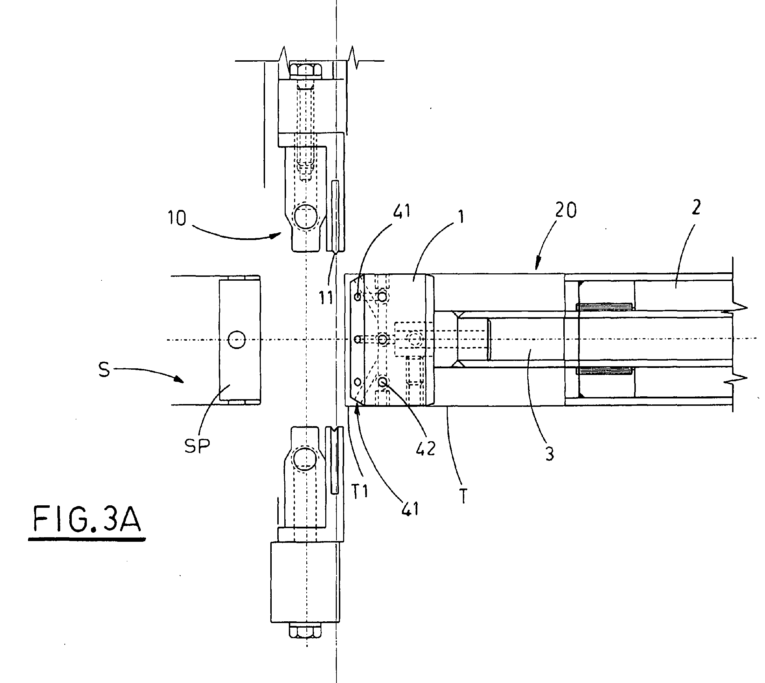

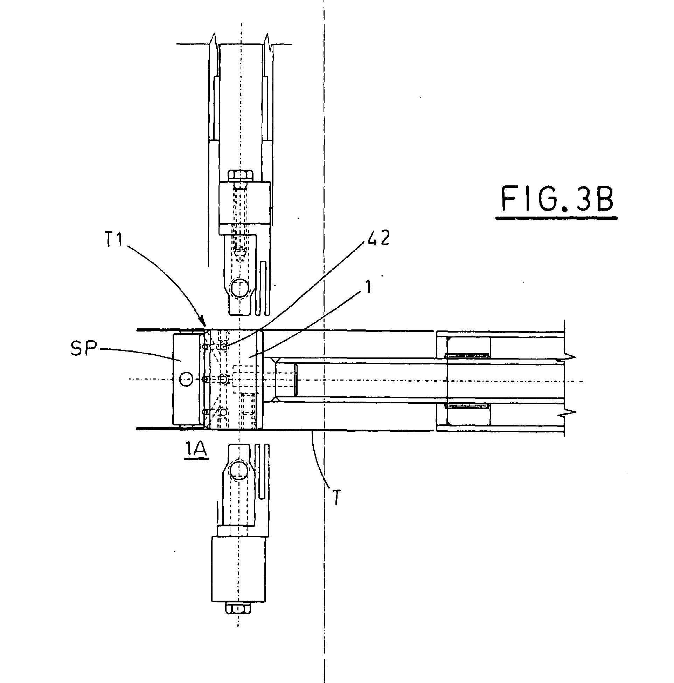

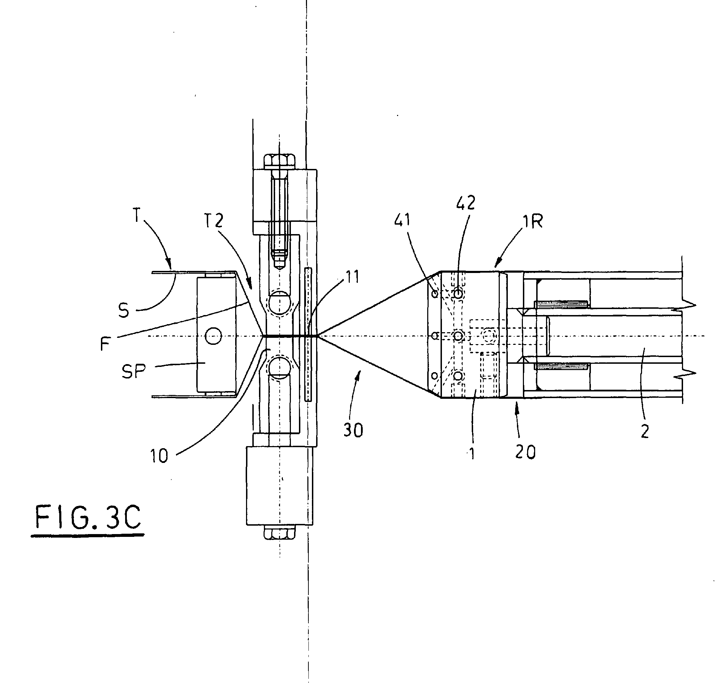

As shown in detail in Figures 3A, 3B and 3C, the moving member (1) is connected to the stationary element (2), so as to translate from a rear position (1R) (Figure 2, Figure 3C), in which it is situated substantially beside the end of the stationary element (2) facing the containers forming apparatus, and a fore position (1A) (Figure 3B), in which it substantially touches the proximal end (SP) of the support (S), in order to allow the tubular element (T) to be fitted on the support.

The moving member (1) translates also from the fore position (1A) to the rear position (1R), so as to allow the second end (T2) of the tubular element (T) to be folded and welded, in order to define the relative bottom (F), and to cut the second end (T2) from the piece (20).

Then the moving member (1) is ready for transferring a subsequent tubular element (T) of the piece (20) to a subsequent support (S).

It is to be pointed out that, after the second end (T2) of the tubular element (T) fitted on the support (S) has been cut from the piece (20), the extreme fore portion (30) of the latter remains folded: for this purpose, the moving member (1) has a first plurality of holes (41), situated in its extreme fore portion and connected to a source of compressed air (not shown).

The source of compressed air is activated to feed compressed air to the first plurality of holes (41) in step relation with the movement of the moving member (1) from the rear position (1R) to the fore position (1A), in order to translate the subsequent tubular element (T) of the piece toward the corresponding support (S), so as to widen the extreme folded portion (30) to re-shape it according to the corresponding tubular shape (see Figure 3A, which shows the moment, in which the moving member (1), during its translation to the fore position (1A), reaches the end of the extreme portion (30), which constitutes the first end of the subsequent tubular element (T)).

The moving member (1) is connected to the stationary element (2) by a reciprocating stem (3), responsible for the alternate movement of the moving member (1) from the rear position (1R) to the fore position (1A).

Further, the moving member (1), as well as the stationary element (2) have the same cross-section, corresponding to the cross-section required for the containers and complementary to the one of the supports (S).

The device (D) is also equipped with means (5) for translating the piece (20), aimed at being operated synchronously with the moving member (1), in order to cooperate therewith to translate the tubular element (T) to the support (S) and to fit the tubular element (T) on the support (S).

In particular, during normal operation of the device (D), the translation means (5) are operated when the moving member (1) reaches the end of the extreme portion (30) of the piece (20), during the translation of the latter from the rear position (1R) to the fore position (1A) (see Figure 3A).

The translating means (5) include pairs of endless belts (51), situated on opposite sides of the stationary element (2), so that the relative working runs (52) touch directly the outer lateral surface of the tubular piece (20).

The working runs (52) of the pairs of belts (51) are operated by relative operating rolls in the same forward movement direction.

The translation means (5) are deactivated when the first end (T1) of the tubular element (T) is positioned at the distal end (SD) of the support (S) and are kept inoperative during the return of the moving member (1) from its fore position (1A) to its rear position (1R).

The apparatus (70) for forming containers includes, in known way, transferring means (6), connected laterally to the supports (S) and facilitating the translation and the sliding of the tubular element (T) on the support, cooperating with the action of the translation means (5).

In order to facilitate a more efficient sliding of the tubular element (T) on the support (S), the moving member (1) features a second plurality of holes (42) connected to the source of compressed air.

The holes (42) are fed by the source of compressed air in step relation with the reaching, by the moving member (1), of the fore position (1A), in order to dilate and widen the tubular element (T) with respect to the support (S), thus creating a kind of air pad between them, which considerably reduces the friction that could be created between the inner surface of the tubular element (T) and the outer surface of the support (S).

This facilitates the sliding of the tubular element (T) with respect to the support (S), making faster the positioning of the first end (T1) of the tubular element (T) in correspondence to the distal end (SD) of the support (S).

As shown for example in Figure 3A, the above mentioned first plurality of holes (41) is made on the lateral surface of the end of the moving member (1), which can have a tapered shape, while the second plurality of holes (42) is made on the lateral surface of the moving member (1), near its end.

Moreover, the supports (S) of the conveying line can have a plurality of holes (SF), likewise connected to a source of compressed air, to facilitate bigger dilation of the tubular element (T) during its sliding on the support (S).

The operation of the proposed device is now described, beginning from the positioning of the first tubular element (T) of the piece (20) on a relative support (S) and taking into consideration the working sequences of Figures 3A, 3B and 3C, which show in detail the most significant steps and characteristics of the device working.

The arms supporting the folding and welding means (10) and the cutting means (11) are open, the conveying line of the apparatus (70) has positioned a relative support (S) opposite to the stationary element (2) of the device (D) and the moving member (1) is operated to translate from the rear position (1R) to the fore position (1A).

In step relation, and synchronously with the translation of the moving member (1), the translation means (5) are operated: the combination of the operation of the moving member (1) and of the translation means (5) allows the first tubular element (T) of the piece (20) to move toward the corresponding support (S), on which it is to be fitted.

The moving member (1) reaches, as shown in Figure 3B, the support (S), accompanying the first end (T1) of the tubular element (T) to the proximal end (SP) of the support (S).

The source of compressed air is activated to feed the second plurality of holes (42) to dilate and widen the tubular element (T) with respect to the support (S), so as to allow the translation means (5) to make the tubular element (T) slide, and consequently fit on the support (S) rapidly and easily, until the first end (T1) of the tubular element (T) reaches the distal end (SD) of the support (S).

In order to facilitate the sliding of the tubular element (T) on the support (S), also the transferring means (6) are operated and the holes (SF) are fed by the relative source (of) compressed air.

The translation means (5) and the transferring means are then stopped, the source of compressed air of the second plurality of holes (42) is deactivated, and so is the source of compressed air of the holes (SF), the moving member (1) returns from the fore position (1A) to the rear position (1R) and the arms supporting the folding and welding means (10) and the cutting means (11) are tightened (see in detail Figure 3C).

In this way, the second end (T2) of the tubular element (T) is folded on the proximal end (SP) of the support (S) and welded, to define the bottom (F) of the tubular element (T), and the tubular element (T) is cut from the piece (20), that is from the subsequent tubular element (T) comprised in the piece (20).

As it can be seen from Figure 3C, due to the above operations, the extreme fore portion (30) of the piece (20), which constitutes the first end of the subsequent tubular element (T) to be fitted on a subsequent support of the apparatus (70) and to be cut from the piece (20), is folded on itself as a result of the previous operating of the folding means.

Therefore, during the initial step of the translation of the moving member (1) from the rear position (1R) to the fore position (1A), the source of compressed air is activated to feed the first plurality of holes (41), in order to open the folded extreme portion (30), re-shaping it on the moving member (1) and giving it again the corresponding cross-section.

At the moment, in which the end of the moving member (1) reaches the end of the extreme portion (30) of the piece (20), completing its re-shaping according to the corresponding section (configuration shown in Figure 3A), the translation means (5) are activated, and the above described steps are repeated in order to fit the tubular element on the corresponding support and to define a relative bottom.

It results obvious from the above description that the proposed device allows, advantageously to make automatic and mechanized the operations necessary to fit single and subsequent tubular elements on corresponding supports of an apparatus for forming containers, which results in the increase of the apparatus productive performance.

Further, the proposed device allows also to define the bottom of tubular elements fitted on the relative supports by simple and rapid operation.

The device subject of the present invention turns out to be particularly reliable and functional in any operation condition and in relation to the requested performances.

According to the previously described embodiment, the shearing step in which the tubular element is cut from the piece is carried out while the tubular element is also folded and welded; in accordance with operational needs, such shearing can be made before transferring the tubular element, and before the operation of the moving member from the rear position' (1R) to the fore position (1A) and directly on the stationary element (2).

Anyway, such particular embodiment is to be considered included within the scope of the present invention.

## Claims

1. Device for fitting a tubular element on a support of complementary cross section, and for defining the bottom of such tubular element, **characterized in that** it includes a moving member (1) that has a plurality of holes for compressed air, and which is designed for acting on a first end (T1) of said tubular element (T) in order to transfer the latter to a proximal end (SP) of a related support (S) to allow the tubular element (T) to be fitted on said support (S), so that said first end (T1) of said tubular element (T) result to be situated at the distal end (SD) of the support (S) and a second end (T2) of the same tubular element (T) is situated near the proximal end (SP) of the support (S), and **in that** it includes means (10) for folding and welding said second end (T2) in order to define a bottom (F) of the tubular element (T).

2. Device according to claim 1, **characterized in that** it includes a stationary element (2), of elongated shape, disposed upstream of said moving member (1), and with a cross-section corresponding to the cross-section of said tubular element (T), said stationary member being designed for receiving, fitted thereon, a single tubular piece (20) obtained from a thermo-weldable plastic material film (21) by folding means (22) and winding means (23) for winding the film onto a stationary element (2) with overlapped longitudinal edges, which edges are then welded to one another by welding means (24), said single tubular piece (20) including a series of adjacent tubular elements, as a single unit, which are to be fitted onto respective supports (S), said tubular element (T) forming the advanced extreme portion of said piece (20).

3. Device according to claim 2, **characterized in that** it includes cutting means (11), joined to said folding and thermo-welding means (10), for cutting said second end (T2) of the tubular element (T) away form said piece (20) in phase relation with positioning of said first end (T1) of the tubular element (T) at said distal end (SD) of said support (S).

4. Device according to claim 3, **characterized in that** said moving member (1) is joined to said stationary element (2) in such a way that it can shift from a rear position (1R), in which it is situated substantially beside one end of the stationary element (2), to a fore position (1A), in which it substantially touches the said proximal end (SP) of the support (S), in order to allow the tubular element (T) to be fitted on the support, and vice-versa, from the fore position (1A) to the rear position (1R), so as to allow the second end (T2) of the tubular element (T) to be folded and welded, and to allow the second end (T2) to be cut from the piece (20), in order to define the said bottom (F) and for transferring a subsequent tubular element (T) of the piece (20) to said support (S), the extreme fore portion (30) of the latter remaining folded due to the shearing of the previous tubular element (T) away from the piece (20).

5. Device according to claim 4, **characterized in that** said moving member (1) is joined to said stationary element (2) by means of a reciprocating stem (3).

6. Device according to claim 4, **characterized in that** it includes means (5) for translating the piece (20), which translating means are operated synchronously with the moving member (1), during the shift of this letter from the rear position (1R) to said fore position (1A), in order to cooperate with said moving member (1) for moving the tubular element (T) to the support (S) and to fit the tubular element (T) on the support (S).

7. Device according to claim 6, **characterized in that** the said translating means (5) include pairs of endless belts (51), situated on opposite sides of the stationary element (2), and acting with a relative runs (52) directly the outer lateral surface of the tubular piece (20).

8. Device according to claim 4, **characterized in that** said moving member (1) has a first plurality of holes (41) which are fed with compressed air from a source of compressed air, so as to widen the extreme folded portion (30) of the subsequent tubular element (T) of the piece (20) to be fitted onto a related support (S) and for re-shape it according to the corresponding tubular shape

9. Device according to claim 8, **characterized in that** said first plurality of holes (41) is fed by said source of compressed air in step relation with the initial stage of movement of the moving member (1) from the rear position (1R) to the fore position (1A),

10. Device according to claim 4, **characterized in that** the said moving member (1) features also a second plurality of holes (42), which are fed by a source of compressed air to dilate and widen the tubular element (T), in step relation with the reaching, by the moving member (1), of the fore position (1A), so as to facilitates the sliding of the tubular element (T) with respect to the support (S), thus allowing the same tubular element (T) to fit easily and quickly said support (S).

11. Device according to claim 3, **characterized in that** the folding and welding means (10), as well as the cutting means (11), are supported by a pair of arms, set one opposite to the other in a normally open configuration, and aimed at being set closed to each other when the said first end (T1) of the tubular element (T) is positioned at said distal end (SD) of said support (S), in order to perform folding and welding of said second end (T2) of the tubular element (T) and to define said bottom (F) and to shear said second end away from the extreme fore end of a subsequent tubular element (T) of said piece (20).

12. Device according to claim 2, **characterized in that** said moving member (1) and said stationary element (2) have relevant cross-sections corresponding to the cross-section of said support (S).

13. Device according to claim 2, **characterized in that** said moving member (1) is associated with said stationary element (2) in such a way that it can operate internally within said tubular element (T), along the lateral internal surface of this latter.

14. Device according to any one of the previous claims, **characterized in that** said device is located between a feeding station for feeding a film of plastic thermo-weldable material, and an apparatus for manufacturing containers from tubular elements fitted onto relevant supports.

## Patentansprüche

1. Vorrichtung zum Aufpassen eines röhrenförmigen Elements auf einen Träger mit komplementärem Querschnitt, sowie zum Ausbilden des Bodens eines derartigen röhrenförmigen Elements, **dadurch gekennzeichnet, dass** sie ein sich bewegendes Glied (1) mit einer Vielzahl von Löchern für Druckluft aufweist, welches so konstruiert ist, dass es auf ein erstes Ende (T1) des röhrenförmigen Elements (T) einwirkt, um letzteres auf ein proximales Ende (SP) eines zugehörigen Trägers (S) zu übertragen, um ein Aufpassen des röhrenförmigen Elements (T) auf den Träger (S) zu ermöglichen, so dass sich das erste Ende (T1) des röhrenförmigen Elements (T) als Ergebnis am distalen Ende (SD) des Trägers (S) befindet, und sich ein zweites Ende (T2) des gleichen röhrenförmigen Elements (T) in der Nähe des proximalen Endes (SP) des Trägers (S) befindet, und **dadurch**, dass sie ein Mittel (10) zum Falten und Verschweißen des zweiten Endes (T2) aufweist, um **dadurch** einen Boden (F) des röhrenförmigen Elements (T) zu bilden.

2. Vorrichtung nach Anspruch 1, **dadurch gekennzeichnet, dass** sie ein feststehendes Element (2) länglicher Form aufweist, das stromaufwärts von dem sich bewegenden Glied (1) angeordnet ist und in seinem Querschnitt demjenigen des röhrenförmigen Elements (T) entspricht, wobei dieses feststehende Element zur Aufnahme eines auf ihm aufgepassten einzelnen röhrenförmigen Stücks (20) ausgelegt ist, das aus einer Folie (21) aus wärmeschweißbarem Kunststoffmaterial durch ein Faltmittel (22) erhalten wird, sowie durch ein Wickelmittel (23) zum Aufwickeln der Folie auf ein feststehendes Element (2) unter Überlappung der Längsränder, wobei diese Ränder dann durch ein Schweißmittel (24) miteinander verschweißt werden, wobei das einzelne röhrenförmige Stück (20) eine Reihe beieinanderliegender röhrenförmiger Elemente, als einzelne Einheit, aufweist, welche auf entsprechende Träger (S) aufgepasst werden sollen, wobei das röhrenförmige Element (T) den vorgerückten äußersten Abschnitt dieses Stücks (20) bildet.

3. Vorrichtung nach Anspruch 2, **dadurch gekennzeichnet, dass** sie ein Schneidemittel (11) aufweist, welches mit dem Falt- und Wärmeschweißmittel (10) verbunden ist, um das zweite Ende (T2) des röhrenförmigen Elements (T) im Phasenverhältnis zur Positionierung des ersten Endes (T1) des röhrenförmigen Elements (T) am distalen Ende (SD) des Trägers (S) vom Stück (20) abzuschneiden.

4. Vorrichtung nach Anspruch 3, **dadurch gekennzeichnet, dass** das sich bewegende Glied (1) mit dem feststehenden Element (2) derart verbunden ist, dass es sich aus einer hinteren Stellung (1R), in der es sich im Wesentlichen neben einem Ende des feststehenden Elements (2) befindet, in eine vordere Stellung (1A) verschieben kann, in der es im Wesentlichen das proximale Ende (SP) des Trägers (S) berührt, um ein Aufpassen des röhrenförmigen Elements (T) auf den Träger zu ermöglichen, und sich umgekehrt aus der vorderen Stellung (1A) in die hintere Stellung (1R) verschieben kann, damit das zweite Ende (T2) des röhrenförmigen Elements (T) gefaltet und verschweißt werden kann, und um ein Abschneiden des zweiten Endes (T2) vom Stück (20) zu ermöglichen, um den Boden (F) zu bilden, und ein Übertragen eines nachfolgenden röhrenförmiges Elements (T) des Stücks (20) an den Träger (S) zu ermöglichen, wobei dessen äußerster vorderer Abschnitt (30) aufgrund des Abscherens des vorherigen röhrenförmigen Elements (T) vom Stück (20) gefaltet bleibt.

5. Vorrichtung nach Anspruch 4, **dadurch gekennzeichnet, dass** das sich bewegende Glied (1) über einen hin- und hergehenden Schaft (3) mit dem feststehenden Element (2) verbunden ist.

6. Vorrichtung nach Anspruch 4, **dadurch gekennzeichnet, dass** sie Mittel (5) zum Übertragen des Stücks (20) aufweist, wobei diese Übertragungsmittel synchron mit dem sich bewegenden Glied (1) während der Verschiebung von letzterem aus seiner hinteren Stellung (1R) in seine vordere Stellung (1A) betrieben werden, damit sie mit dem sich bewegenden Glied (1) zusammen wirken, um das röhrenförmige Element (T) zum Träger (S) zu bewegen und das röhrenförmige Element (T) auf den Träger (S) aufzupassen.

7. Vorrichtung nach Anspruch 6, **dadurch gekennzeichnet, dass** die Übertragungsmittel (5) Paare von Endlosriemen (51) aufweisen, welche auf gegenüberliegenden Seiten des feststehenden Elements (2) angeordnet sind, und mit einem relativen Verlauf (52) direkt auf die äußere seitliche Oberfläche des röhrenförmigen Stücks (20) einwirken.

8. Vorrichtung nach Anspruch 4, **dadurch gekennzeichnet, dass** das sich bewegende Glied (1) eine erste Vielzahl von Löchern (41) aufweist, die mit Druckluft aus einer Druckluftquelle gespeist werden, um den äußersten gefalteten Abschnitt (30) des nachfolgenden röhrenförmigen Elements (T) des Teils (20), das auf einen zugehörigen Träger (S) aufgepasst werden soll, zu weiten und gemäß der entsprechenden röhrenförmigen Form umzuformen.

9. Vorrichtung nach Anspruch 8, **dadurch gekennzeichnet, dass** die erste Vielzahl von Löchern (41) von der Druckluftquelle im Schrittverhältnis mit der anfänglichen Stufe der Bewegung des sich bewegenden Glieds (1) aus der hinteren Stellung (1R) in die vordere Stellung (1A) gespeist wird.

10. Vorrichtung nach Anspruch 4, **dadurch gekennzeichnet, dass** das sich bewegende Element (1) außerdem eine zweite Vielzahl von Löchern (42) aufweist, die von einer Druckluftquelle gespeist werden, um das röhrenförmige Element (T) im Schrittverhältnis dazu, dass das sich bewegende Glied (1) die vordere Stellung (1A) erreicht, zu dehnen und aufzuweiten, um das Verschieben des röhrenförmigen Elements (T) bezüglich des Trägers (S) zu. erleichtern, wodurch sich das röhrenförmige Element (T) leicht und schnell auf den Träger (S) aufpassen lässt.

11. Vorrichtung nach Anspruch 3, **dadurch gekennzeichnet, dass** das Falt- und Schweißmittel (10) sowie das Schneidemittel (11) von einem Paar von Armen gehalten werden, die einander gegenüberliegend in normalerweise geöffneter Konfiguration angeordnet sind und die darauf ausgerichtet sind, nahe zueinander gesetzt zu werden, wenn das erste Ende (T1) des röhrenförmigen Elements (T) am distalen Ende (SD) des Trägers (S) angeordnet ist, um ein Falten und Verschweißen des zweiten Endes (T2) des röhrenförmigen Elements (T) durchzuführen und den Boden (F) zu bilden und das zweite Ende vom äußersten vorderen Ende eines nachfolgenden röhrenförmigen Elements (T) des Stücks (20) abzuscheren.

12. Vorrichtung nach Anspruch 2, **dadurch gekennzeichnet, dass** das sich bewegende Glied (1) und das feststehende Element (2) in ihren jeweiligen Querschnitten dem Querschnitt des Trägers (S) entsprechen.

13. Vorrichtung nach Anspruch 2, **dadurch gekennzeichnet, dass** das sich bewegende Glied (1) mit dem feststehenden Element (2) derart verbunden ist, dass es im Inneren des röhrenförmigen Elements (T) entlang dessen seitlicher Innenfläche wirken kann.

14. Vorrichtung nach einem der vorhergehenden Ansprüche, **dadurch gekennzeichnet, dass** sich die Vorrichtung zwischen einer Zuführstation zum Zuführen einer Folie aus wärmeschweißbarem Kunststoffmaterial und einer Vorrichtung zum Herstellen von Behältern aus auf entsprechenden Trägern aufgepassten röhrenförmigen Elementen befindet.

## Revendications

1. Dispositif pour emboîter un élément tubulaire sur un support de section transversale complémentaire et pour définir le fond dudit élément tubulaire, **caractérisé en ce qu'**il comprend un élément mobile (1) qui comporte une pluralité d'orifices pour de l'air comprimé et qui est conçu pour agir sur une première extrémité (T1) dudit élément tubulaire (T) afin de transférer cette dernière vers une extrémité proximale (SP) d'un support associé (S) pour permettre à l'élément tubulaire (T) d'être emboîté sur ledit support (S), de façon à ce que ladite première extrémité (T1) dudit élément tubulaire (T) se trouve située à l'extrémité distale (SD) du support (S) et une seconde extrémité (T2) du même élément tubulaire (T) soit située près de l'extrémité proximale (SP) du support (S), et **en ce qu'**il comprend des moyens (10) pour plier et pour souder ladite seconde extrémité (T2) afin de définir un fond (F) de l'élément tubulaire (T).

2. Dispositif selon la revendication 1, **caractérisé en ce qu'**il comprend un élément fixe (2), de forme allongée, disposé en amont dudit élément mobile (1) et avec une section transversale correspondant à la section transversale dudit élément tubulaire (T), ledit élément fixe étant conçu pour recevoir, emboîté sur celui-ci, une seule pièce tubulaire (20) obtenue à partir d'un film en matériau plastique thermosoudable (21) par des moyens de pliage (22) et des moyens d'enroulement (23) pour enrouler le film sur un élément fixe (2) avec des bords longitudinaux se chevauchant, lesquels bords sont ensuite soudés l'un à l'autre par des moyens de soudage (24), ladite seule pièce tubulaire (20) comprenant une série d'éléments tubulaires adjacents, en une seule unité, qui doivent s'emboîter sur des supports respectifs (S), ledit élément tubulaire (T) formant la partie avancée extrême de ladite pièce (20).

3. Dispositif selon la revendication 2, **caractérisé en ce qu'**il comprend des moyens de coupe (11), joints auxdits moyens de pliage et de thermosoudage (10), destinés à couper ladite seconde extrémité (T2) de l'élément tubulaire (T) loin de ladite pièce (20) en relation de phase avec le positionnement de ladite première extrémité (T1) de l'élément tubulaire (T) à ladite extrémité distale (SD) dudit support (S).

4. Dispositif selon la revendication 3, **caractérisé en ce que** ledit élément mobile (1) est joint audit élément fixe (2) de telle manière qu'il peut se déplacer d'une position arrière (1R), dans laquelle il se situe sensiblement à côté d'une extrémité de l'élément fixe (2), à une position avant (1A), dans laquelle il touche sensiblement ladite extrémité proximale (SP) du support (S), afm de permettre à l'élément tubulaire (T) d'être emboîté sur le support, et vice versa, depuis la position avant (1A) vers la position arrière (1R), de façon à permettre à la seconde extrémité (T2) de l'élément tubulaire (T) d'être pliée et soudée, et afin de permettre à la seconde extrémité (T2) d'être coupée de la pièce (20), afin de définir ledit fond (F) et pour transférer un élément tubulaire (T) ultérieur de la pièce (20) vers ledit support (S), la partie extrême avant (30) de ce dernier restant pliée en raison du cisaillement de l'élément tubulaire (T) précédent depuis la pièce (20).

5. Dispositif selon la revendication 4, **caractérisé en ce que** ledit élément mobile (1) est joint audit élément fixe (2) au moyen d'une tige de va-et-vient (3).

6. Dispositif selon la revendication 4, **caractérisé en ce qu'**il comprend des moyens (5) pour translater la pièce (20), lesquels moyens de translation sont mis en fonctionnement de façon synchrone avec l'élément mobile (1), au cours du changement de ce dernier de la position arrière (1R) à ladite position avant (1A), afin de coopérer avec ledit élément mobile (1) pour déplacer l'élément tubulaire (T) vers le support (S) et pour emboîter l'élément tubulaire (T) sur le support (S).

7. Dispositif selon la revendication 6, **caractérisé en ce que** lesdits moyens de translation (5) comprennent des paires de courroies sans fin (51), situées sur des côtés opposés de l'élément fixe (2), et agissant avec une course relative (52) directement au niveau de la surface latérale extérieure de la pièce tubulaire (20).

8. Dispositif selon la revendication 4, **caractérisé en ce que** ledit élément mobile (1) comporte une première pluralité d'orifices (41) qui sont alimentés par de l'air comprimé provenant d'une source d'air comprimé, de façon à élargir la partie extrême pliée (30) de l'élément tubulaire ultérieur (T) de la pièce (20) devant être emboîté dans la forme tubulaire correspondante.

9. Dispositif selon la revendication 8, **caractérisé en ce que** ladite première pluralité d'orifices (41) est alimentée par ladite source d'air comprimé dans une relation d'échelons par rapport à l'étape initiale de mouvement de l'élément mobile (1) depuis la position arrière (1R) vers la position avant (1A).

10. Dispositif selon la revendication 4, **caractérisé en ce que** ledit élément mobile (1) présente également une seconde pluralité d'orifices (42), qui sont alimentés par une source d'air comprimé afin de dilater et d'élargir l'élément tubulaire (T), dans une relation d'échelons par rapport au moment où l'élément mobile (1) atteint la position avant (1A), de façon à faciliter le coulissement de l'élément tubulaire (T) par rapport au support (S), permettant ainsi au même élément tubulaire (T) de s'emboîter facilement et rapidement sur ledit support (S).

11. Dispositif selon la revendication 3, **caractérisé en ce que** les moyens de pliage et de soudage (10), ainsi que les moyens de coupe (11) sont supportés par une paire de bras, placés l'un opposé à l'autre dans une configuration normalement ouverte, et destinés à être placés de façon fermée l'un par rapport à l'autre lorsque ladite première extrémité (T1) de l'élément tubulaire (T) est positionnée à ladite extrémité distale (SD) dudit support (S), afin de réaliser le pliage et le soudage de ladite seconde extrémité (T2) de l'élément tubulaire (T) et de définir ledit fond (F) et de cisailler ladite seconde extrémité loin de l'extrémité extrême avant d'un élément tubulaire ultérieur (T) de ladite pièce (20).

12. Dispositif selon la revendication 2, **caractérisé en ce que** ledit élément mobile (1) et ledit élément fixe (2) ont des sections transversales appropriées correspondant à la section transversale dudit support (S).

13. Dispositif selon la revendication 2, **caractérisé en ce que** ledit élément mobile (1) est associé audit élément fixe (2) de telle manière qu'il peut être mis en fonctionnement à l'intérieur dudit élément tubulaire (T), le long de la surface latérale interne de ce dernier.

14. Dispositif selon l'une quelconque des revendications précédentes, **caractérisé en ce que** ledit dispositif est situé entre une station d'approvisionnement pour alimenter un film de matériau plastique thermosoudable, et un appareil pour fabriquer des conteneurs à partir d'éléments tubulaires emboîtés sur des supports appropriés.
